# EUROPEAN PATENT SPECIFICATION

(11) **EP 0 665 132 B1**
(45) Date of publication and mention of the grant of the patent: **29.07.1998**
(21) Application number: 95101283.0
(22) Date of filing: 31.01.1995
(51) Int. Cl.: B60P 3/00, A62C 27/00, B62B 3/00

(54) **Vehicle, in particular for rescue services or the like**
Fahrzeug, insbesondere für Rettungsdienste oder dergleichen
Véhicule, en particulier pour les services de sauvetages ou similaires

(30) Priority: 01.02.1994 DE 4402891
(43) Date of publication of application: 02.08.1995
(73) Proprietor: IVECO MAGIRUS AG, D-89079 Ulm (DE)
(72) Inventor: Frank, Martin, D-77933 Lahr/Schwarzwald (DE); Zawadke, Thomas, D-79336 Herbolzheim (DE)
(74) Representative: Boggio, Luigi

(56) References cited:
- EP-A- 0 310 195
- AU-B- 514 513
- DE-A- 2 741 126
- DE-U- 8 604 097
- DE-U- 8 620 672
- FR-A- 2 662 943
- GB-A- 1 505 481

## Description

The invention relates to a vehicle, in particular for rescue services, for fire or disaster protection or the like, with at least one drawer which serves to accommodate pieces of equipment or accessory equipment and which is guided to slide in a drawer compartment in the vehicle body.

A vehicle of this kind is disclosed by the DE-A 27 41 126.

In vehicles of the type in question here, for example fire-protection vehicles, various compartments are provided for accommodating articles of equipment and accessory equipment. Practical utilisation of the full depth of these compartments is not simple. This is true even if extendable drawers or slides are disposed in the compartments, since it is often not possible to have a proper overall view within a suitably brief time of all the pieces of equipment contained therein. Therefore, attempts have been made to combine like articles, e.g. hoses or containers, and to arrange them one behind the other. Additionally, rotating compartments or swivelling devices are known, which can be pivoted to the side and which give access to spaces situated behind them. Here too, there is the drawback that the entire service crew had to single out all the required equipment under relatively narrow space conditions and taken it with them. The removal of all the respectively associated pieces of equipment is not guaranteed. The conveyance of all the necessary individual pieces over relatively great distances is very labour-intensive. The cleaning of the accommodating compartments is complicated.

Therefore, the invention is based on the object of providing a vehicle of the type indicated in the introduction with compartments in the form of drawers which make it possible to simplify substantially the removal of pieces of equipment and also the removal of sets of associated pieces of equipment, and the conveyance of these items from the place of use.

According to the invention, this object is achieved in a vehicle of the type indicated in the introduction in that the drawer can be removed completely from the drawer compartment after actuating an easily operated lock mechanism and that rollers are provided which are mounted detachably on the drawer.

Therefore, the entire drawer can be taken along as a unit of equipment and, optionally, it can be conveyed to a more distant place of use. Additionally, it is possible for handles to be provided on the drawer, by means of which the drawer can be carried by a number of persons. It is thus possible to convey the drawer even over rough terrain, in an underground railway tunnel, along a motorway, etc. The drawer can also be conveyed by means of a crane or a turntable ladder to a higher or lower location. The rollers are designed such that the drawer can be moved on rails. Optionally, the rollers can be supplemented or replaced by skids, so that the drawer can be also used in snow and ice.

In this context the statement that the drawer is to be removable from the drawer compartment is to be understood in the sense of easily or after actuation of a simple knob or lever. Drawers, which are arranged to slide in a drawer compartment, are always able to be removed in any form. In the present context, the situation is that the drawer according to the invention can be removed on site after actuating an easily operated lock mechanism.

The equipment conveyed in the drawer do not themselves need to have any rollers, since they can be conveyed from the place of use by means of the drawer. A great deal of space and weight can be saved thereby.

Preferably, two pairs of rollers are provided, at least one of which is a pair of steering rollers. A steerable single wheel can be also be provided in place of the pair of steering rollers.

The rollers are preferably mounted on a generally U-shaped stirrup which engages from below under the drawer and comprises a horizontal support member and uprights projecting at the ends thereof, the drawer being situated between said uprights. The support member can be extended for adaptation to different drawer widths.

The support member together with the rollers can be used to convey other apparatus, such as current generators or portable power pumps.

The height of the lateral uprights can be of such dimensions that at least two drawers can be accommodated one above the other, additional supports being secured to the inside of the uprights for the upper one of said drawers.

The handles provided on the drawer can be folded away so that they do not interfere with the drawer compartment when sliding into the drawer compartment.

Preferred examples of embodiment of the invention will be illustrated in more detail below with reference to the accompanying drawings.
- Figure 1: is a schematic end view of a drawer with rollers according to the invention;
- Figure 2: is a corresponding partial side view;
- Figure 3: is an enlarged, partly cut away partial view from the end face;
- Figure 4: shows, in end view, a modified embodiment with respect to Figure 1;
- Figure 5: is a corresponding partial side view.

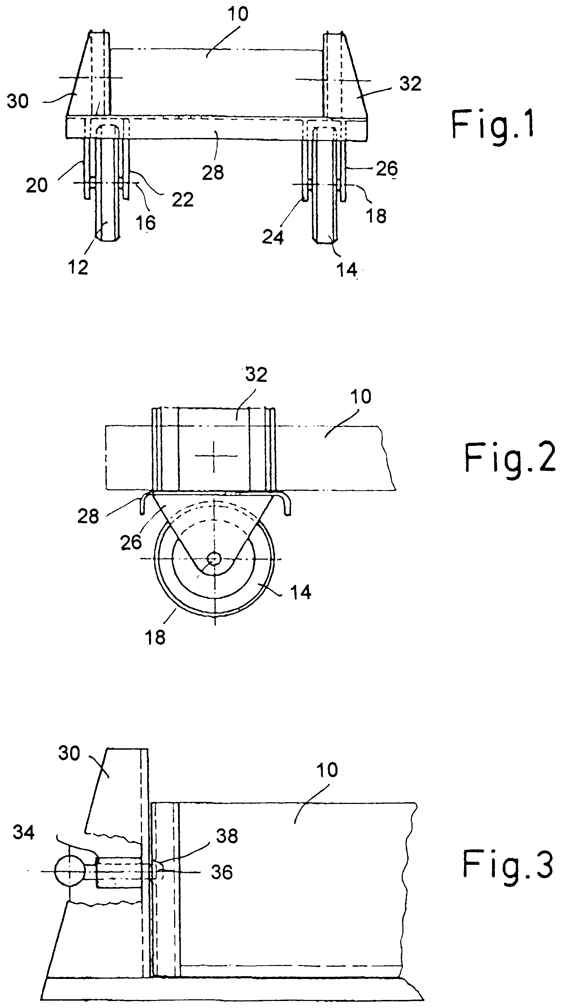

In Figures 1 and 2 the reference numeral 10 denotes a drawer. The drawer is supported inter alia by rollers 12,14 which, in the embodiment illustrated by way of example, are in the form of fixed rollers, the axes 16,18 of which are supported by parallel triangular plates 20,22 and 24,26 respectively.

According to Figures 1 and 2 the plates 20,22,26 are secured, for example welded, to a support member 28 in the form of a downwardly open, U-shaped section. Unlike the illustrated embodiment, the support member 28 can be extended or telescoped in its longitudinal direction so that it can be adapted to drawers 10 of different width.

At both lateral ends of the support member 28 in Figure 1 there are situated vertically projecting uprights 30,32 which, in end view according to Figure 1, are of trapezium-shaped contour with an outer edge (not shown) sloping obliquely outwards and downwards. Viewed from above, the uprights 30,32 may be a bent, U-shaped plate open on the outside.

Spring-loaded locking members 34 are provided inside the uprights 30,32, the locking bolts 36 of which can enter a corresponding recess 38 in the vertical lateral longitudinal walls of the drawer 10, as shown in Figure 3. In this way, the drawer 10 is securely connected with the rollers to form a rigid unit.

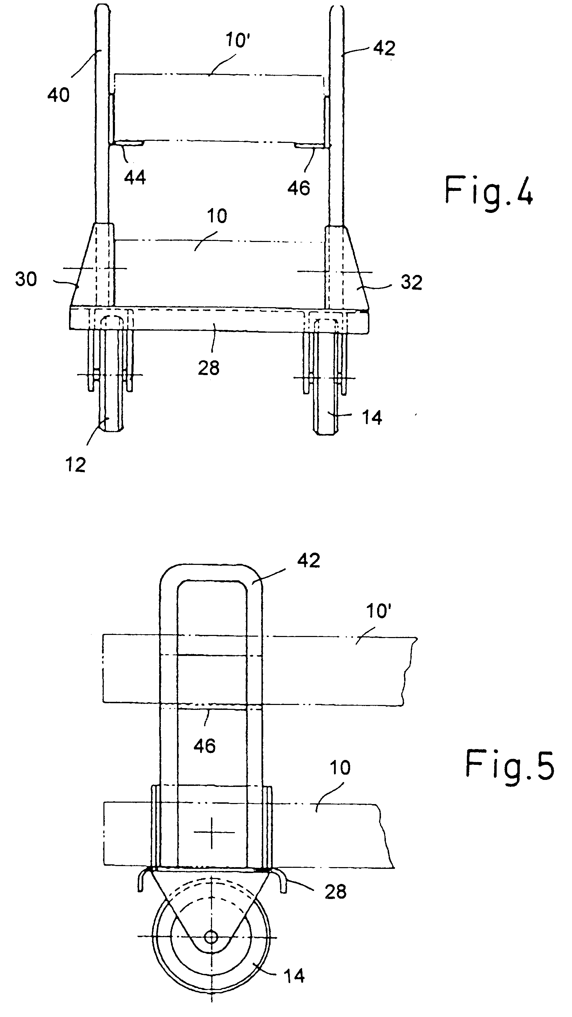

Figures 4 and 5 illustrate a modified embodiment, in which the reference numerals already used in Figures 1 to 3 are adopted for corresponding parts. In the embodiment of Figures 4 and 5 stirrups 40,42, which have the shape of a downwardly open U, are inserted into the outwardly open U-sections of the uprights 30,32. These stirrups can be welded inside the uprights 30,32. They serve primarily for handling the carriage formed by the drawer 10 and the rollers 12,14, i.e. for moving the carriage in an upright position. Moreover, if corresponding supports 44,46 are provided on the mutually facing insides of the stirrups 40,42, they enable a further drawer 10' to be accommodated in an elevated position. As in Figure 3, a spring-loaded locking member 34 (not shown) can also be provided for securing this drawer 10'.

The rollers 12,14 shown in the drawings are in the form of so-called fixed rollers. As already mentioned, it is also possible to provide steering rollers in addition or as an alternative to the fixed rollers.

The application of the present invention is not restricted to rescue services in their widest sense. For example, it may also be applied to commercially used transport vehicles.

## Claims

1. A vehicle, in particular for rescue services, for fire or disaster protection or the like, with at least one drawer which serves to accommodate pieces of equipment or accessory equipment and which is guided to slide in a drawer compartment in the vehicle body, characterised in that the drawer (10) can be removed completely from the drawer compartment after actuating an easily operated lock mechanism and that rollers (12,14) are provided which are mounted detachably on the drawer (10).

2. A vehicle according to Claim 1, characterised in that two pairs of rollers (12,14) are provided, at least one of which is a pair of steering rollers.

3. A vehicle according to Claim 1, characterised in that one pair of rollers with fixed rollers (12,14) and a single steering roller are provided.

4. A vehicle according to any one of the preceding Claims, characterized in that the rollers (12, 14) are mounted on U-shaped stirrups (28, 30, 32) which engage from below under the associated drawer (10) in the assembled condition with a horizontal support member (28) and uprights (30, 32) projecting at the ends thereof.

5. A vehicle according to Claim 4, characterized in that the stirrups (28,30,32) can be extended for adaptation to different drawer widths.

6. A vehicle according to Claim 5, characterised in that the height of the lateral uprights (30,32,40,42) is of such dimensions that at least two drawers can be accommodated one above the other, and in that supports (44,46) for at least one drawer are secured on the mutually facing insides of the uprights, spaced apart above the support member (28).

7. A vehicle according to any one of Claims 4 to 6, characterised in that the uprights (30,32) have spring-loaded locking members (34) for engagement in corresponding recesses (38) in the side walls of the drawers.

8. A vehicle according to any one of the preceding Claims, characterized in that the rollers (12,14) are designed such that they run on rails.

9. A vehicle according to any one of the preceding Claims, characterised in that skids can be mounted on the drawer (10).

10. A vehicle according to any one of the preceding Claims, characterised in that co-operating guide rails are provided in the drawer compartment and on the drawer, which guide rails have co-operating stop members for delimiting the extended end position of the drawer in the drawer compartment, and that the stop members can be readily released for removal of the drawer (10).

11. A vehicle according to any one of the preceding Claims, characterised in that handles which can be folded away are provided on the drawer (10).

## Patentansprüche

1. Fahrzeug, insbesondere für Rettungsdienste, für den Brand- oder Katastrophenschutz oder dergleichen, mit wenigstens einem Schubkasten zur Aufnahme von Ausrüstungsteilen oder -geräten, welcher Schubkasten in einem Schubkastenfach im Aufbau des Fahrzeugs verschiebbar geführt ist, dadurch **gekennzeichnet**, daß der Schubkasten (10) nach Betätigung eines leicht zu bedienenden Sperrmechanismus vollständig aus dem Schubkastenfach herausnehmbar ist und daß Laufrollen (12,14) vorgesehen sind, die lösbar an dem Schubkasten (10) befestigbar sind.

2. Fahrzeug nach Anspruch 1, dadurch **gekennzeichnet**, daß zwei Laufrollenpaare (12,14) vorgesehen sind, von denen wenigstens eines ein Lenkrollenpaar ist.

3. Fahrzeug nach Anspruch 1, dadurch **gekennzeichnet**, daß ein Laufrollenpaar mit festen Rollen (12,14) und eine einzelne Lenkrolle vorgesehen sind.

4. Fahrzeug nach einem der vorhergehenden Ansprüche, dadurch **gekennzeichnet**, daß die Laufrollen (12,14) an U-förmigen Bügeln (28,30,32) gelagert sind, die den zugehörigen Schubkasten (10) in der montierten Stellung mit einem waagerechten Träger (28) und an dessen Enden aufragenden Rungen (30,32) von unten untergreifen.

5. Fahrzeug nach Anspruch 4, dadurch **gekennzeichnet**, daß die Bügel (28,30,32) zur Anpassung an unterschiedliche Schubkastenbreiten ausziehbar sind.

6. Fahrzeug nach Anspruch 5, dadurch **gekennzeichnet**, daß die Höhe der seitlichen Rungen (30,32,40,42) so bemessen ist, daß wenigstens zwei Schubkästen übereinander aufgenommen werden können, und daß auf den einander zugewandten Innenseiten der Rungen in Abständen oberhalb des Trägers (28) Auflagen (44,46) für wenigstens einen Schubkasten befestigt sind.

7. Fahrzeug nach einem der Ansprüche 4 bis 6, dadurch **gekennzeichnet**, daß die Rungen (30,32) federnde Riegel (34) zum Einrasten in entsprechenden Ausnehmungen (38) in den Seitenwänden der Schubkästen aufweisen.

8. Fahrzeug nach einem der vorhergehenden Ansprüche, dadurch **gekennzeichnet**, daß die Laufrollen (12,14) so ausgebildet sind, daß sie auf Schienen laufen.

9. Fahrzeug nach einem der vorhergehenden Ansprüche, dadurch **gekennzeichnet**, daß an dem Schubkasten (10) Kufen montierbar sind.

10. Fahrzeug nach einem der vorhergehenden Ansprüche, **dadurch gekennzeichnet, daß** im Schubkastenfach und am Schubkasten zusammenwirkende Führungsschienen angebracht sind, die zusammenwirkende Anschläge zur Bestimmung der ausgezogenen Endstellung des Schubkastens im Schubkastenfach aufweisen, und daß die Anschläge zur Entnahme des Schubkastens (10) leicht lösbar sind.

11. Fahrzeug nach einem der vorhergehenden Ansprüche, dadurch **gekennzeichnet**, daß an dem Schubkasten (10) versenkbare Griffe vorgesehen sind.

## Revendications

1. Véhicule, en particulier pour des services de sauvetage, de protection contre l'incendie ou les catastrophes, ou similaires, comportant au moins un tiroir qui sert à loger des pièces d'équipement ou un équipement accessoire, et qui est guidé pour glisser dans un compartiment de tiroir se trouvant dans le corps du véhicule,
caractérisé en ce que
le tiroir (10) peut être retiré complètement du compartiment de tiroir après qu'on ait actionné un mécanisme de verrouillage facilement manoeuvrable, et en ce qu'on utilise des galets (12, 14) montés de façon démontable sur le tiroir (10).

2. Véhicule selon la revendication 1,
caractérisé en ce qu'
on utilise deux paires de galets (12, 14) dont l'une au moins est une paire de galets dirigeables.

3. Véhicule selon la revendication 1,
caractérisé en ce qu'
on utilise une paire de galets avec des galets fixes (12, 14) et un galet de direction dirigeable unique.

4. Véhicule selon l'une quelconque des revendications précédentes,
caractérisé en ce que
les galets (12, 14) sont montés sur des étriers en forme de U (28, 30, 32) qui s'engagent par en dessous sous le tiroir (10) associé, dans l'état d'assemblage, avec un élément de support horizontal (28) et des montants verticaux (30, 32) faisant saillie à ses extrémités.

5. Véhicule selon la revendication 4,
caractérisé en ce que
les étriers (28, 30, 32) peuvent être allongés pour s'adapter à des tiroirs de différentes largeurs.

6. Véhicule selon la revendication 5,
caractérisé en ce que
- la hauteur des montants latéraux (30, 32, 40, 42) est d'une taille telle qu'au moins deux tiroirs peuvent être logés l'un sur l'autre, et
- des supports (44, 46) pour au moins un tiroir sont fixés sur les côtés intérieurs se faisant mutuellement, face des montants, en étant espacés au-dessus de l'élément de support (28).

7. Véhicule selon l'une quelconque des revendications 4 à 6,
caractérisé en ce que
les montants (30, 32) comportent des éléments de verrouillage (34) poussés par des ressorts et destinés à s'engager dans des cavités correspondantes (38) formées dans les parois latérales des tiroirs.

8. Véhicule selon l'une quelconque des revendications précédentes,
caractérisé en ce que
les galets (12, 14) sont conçus de manière à pouvoir rouler sur des rails.

9. Véhicule selon l'une quelconque des revendications précédentes,
caractérisé en ce que
des patins peuvent être montés sur le tiroir (10).

10. Véhicule selon l'une quelconque des revendications précédentes,
caractérisé en ce que
des rails de guidage en coopération sont prévus dans le compartiment de tiroir et sur le tiroir, ces rails de guidage comportant des éléments de butée en coopération pour délimiter la position d'extrémité prolongée du tiroir dans le compartiment de tiroir, et en ce que les éléments de butée peuvent être facilement libérés pour retirer le tiroir (10).

11. Véhicule selon l'une quelconque des revendications précédentes,
caractérisé en ce que
des poignées pouvant être repliées sont prévues sur le tiroir (10).
